# EUROPÄISCHE PATENTSCHRIFT

(11) **EP 1 474 617 B1**
(45) Veröffentlichungstag und Bekanntmachung des Hinweises auf die Patenterteilung: **10.01.2007**
(21) Anmeldenummer: 03704455.9
(22) Anmeldetag: 23.01.2003
(51) Int. Cl.: F16C 23/04, F16C 33/10, F04B 1/20

(54) **KOLBENMASCHINE ODER DREHGLEITLAGERUNG**
PISTON MACHINE OR SWIVEL SLIDE BEARING
MACHINE A PISTON OU PALIER LISSE DE PIVOTEMENT

(30) Priorität: 15.02.2002 DE 10206381; 08.05.2002 DE 10220610
(43) Veröffentlichungstag der Anmeldung: 10.11.2004
(73) Patentinhaber: Brueninghaus Hydromatik GmbH, 89275 Elchingen (DE)
(72) Erfinder: HOPPE, Stefan, 72172 Sulz am Neckar (DE)
(74) Vertreter: Körfer, Thomas
(86) Internationale Anmeldenummer: PCT/EP2003/000681
(87) Internationale Veröffentlichungsnummer: WO 2003/069174

(56) Entgegenhaltungen:
- DE-U- 9 103 425
- GB-A- 779 191
- US-A- 2 309 281
- US-A- 2 825 608
- US-A- 3 746 410
- US-A- 3 765 733
- US-A- 6 017 184
- US-A- 6 149 310

## Beschreibung

Die Erfindung bezieht sich auf eine Kolbenmaschine gemäß dem Anspruch 1 oder auf eine Drehgleitlagerung gemäß dem Anspruch 3 oder 10.

Bei der Drehlagerung von Wellen mittels zwei einen axialen Abstand voneinander aufweisenden Drehlagern bestehen unter anderem insbesondere bei Kolbenmaschinen oder Axialkolbenmaschinen folgende Forderungen:

Aufgrund kaum zu vermeidender Toleranzen bedarf es für wenigstens eines der beiden Drehlager der Möglichkeit eines Ausgleichs bei mangelnder Flucht zwischen den Drehlagern. Zum anderen bedarf es auch der Eignung für wenigstens eines der Drehgleitlager, die Triebwelle auch bei insbesondere unter Vollast auftretenden Durchbiegungen sicher und langlebig zu lagern.

Bei bekannten Kolbenmaschinen oder Axialkolbenmaschinen kommen übliche Wälzlager zum Einsatz, die in der Lage sind, Radial- und gegebenenfalls auch Axialkräfte aufzunehmen. Zwar sind diese Lager auch beim Vorhandensein einer mangelnden Flucht der Lager oder einer Durchbiegung der Welle funktionsfähig, jedoch besteht die Gefahr einer Überlastung, die zu einem höheren Verschleiß, einer höheren Erwärmung und zu einer Verringerung der Lebensdauer führt.

Ein Drehgleitlager der eingangs angegebenen Art ist ohne Angabe eines bestimmten Einsatzgebietes in der DE 43 36 915 A1 beschrieben und dargestellt. Bei dieser vorbekannten Ausgestaltung ist die Montage bzw. Demontage des Drehgleitlagers problematisch. Deshalb ist dort der gehäuseseitige Lagerkörper mehrteilig ausgebildet, was die Montage jedoch erschwert.

In der GB 779 191 A ist ein sogenanntes Gelenk-Gleitlager mit einem inneren Lagerteil in Form einer Hülse beschrieben, die drehbar in einem äußeren Lagerteil angeordnet ist, das mit einer kugelabschnittförmigen Mantelfläche in einer dritten Lagerhülse kippbar gelagert ist, wobei die Lagerhülse mit einer konkaven kugelabschnittförmigen Innenfläche auf dem äußeren Lagerteil gelagert ist. Zur Montage des äußeren Lagerteils in der Lagerhülse weist letztere in ihrer konkaven kugelabschnittförmigen Innenfläche eine axial ausmündende Einführungsnut auf, in der das innere Lagerteil in einer winkelverdrehten Stellung in die Lagerhülse einführbar ist.

Die US 3 765 733 A zeigt ebenfalls ein aus einem inneren Lagerteil, einem äußeren Lagerteil und einer äußeren Lagerhülse bestehendes Gelenk-Gleitlager, dessen äußeres Lagerteil und äußere Lagerhülse ebenfalls mit einer konvexen und einer konkaven kugelabschnittförmigen Lagerflläche aufeinander gelagert sind. Das äußere Lagerteil ist auf dem inneren Lagerteil durch auf beiden Seiten angeordnete Scheiben positioniert, die durch in Nuten eingesetzte Sicherungsringe auf dem inneren Lagerteil fixiert sind.

In der DE 91 03 425 U1 ist ein Gelenk-Drehgleitlager beschrieben, bestehend aus zwei durch eine konvexe und eine konkave kugelabschnittförmige Lagerfläche aufeinander gelagerten Lagerhülsen, die exzentrisch ausgebildet sind. Hierdurch ist die den Exzentrizitäten abgewandte radiale Ringabmessung des Gelenk-Drehgleitlagers verringert. Zur Sicherung der Lagerhülsen in ihren exzentrischen Positionen ist eine zwischen ihnen wirksame Drehsperrvorrichtung vorgesehen, die in der zugehörigen Axialebene ein so großes Bewegungsspiel hat, daß Gelenkbewegungen zwischen den Lagerhülsen durchführbar sind.

Der Erfindung liegt die Aufgabe zugrunde, eine Kolbenmaschine oder eine Drehgleitlagerung so auszugestalten, daß sie bei Gewährleistung einer langen Lebensdauer in einfacher Weise montierbar bzw. demontierbar ist.

Diese Aufgabe wird durch die Merkmale des Anspruchs 1, 2 oder 10 gelöst. Vorteilhafte Weiterbildungen der Erfindung sind in den Unteransprüchen beschrieben.

Bei den erfindungsgemäßen Ausgestaltungen weist das dritte Lagerteil auf einer Seite zumindest eine Einführungsnut auf, in der das zweite Lagerteil in winkelverdrehter Stellung bis in eine Stellung einführbar ist, in der die Krümmungsmittelpunkte der Lagerflächen einander im wesentlichen decken. In dieser Stellung läßt sich das zweite Lagerteil in seine Funktionsstellung verdrehen, in der seine Mittelachse mit der Mittelachse des dritten Lagerteils im wesentlichen fluchtet.

Der Erfindung liegt die Erkenntnis zugrunde, daß dann, wenn die Krümmungsmittelpunkte in ein und demselben Punkt liegen, die Lagerteile sich um den Krümmungsmittelpunkt relativ zueinander drehen lassen, weil die kugelabschnittförmigen Lagerflächen sich in einer zueinander passenden Stellung befinden, die das Drehen in eine etwa koaxiale Stellung beim Montieren und das Rückdrehen in eine der Einführungsnut entsprechenden Querstellung ermöglicht. Hierbei liegt der Erfindung im weiteren die Erkenntnis zugrunde, daß dann, wenn die axiale Breite des ersten Lagerteils kleiner ist als der Randdurchmesser der kugelabschnittförmigen Lagerfläche des äußeren Lagerteils und die Breite der Einführungsnut ebenfalls kleiner ist als der Randdurchmesser trotz des Vorhandenseins der Einführungsnut hinreichend große Flächenabschnitte der kugelabschnittförmigen Lagerfläche verbleiben, die in der montierten Stellung des ersten Lagerteils es ermöglichen, daß das äußere Lagerteil das innere Lagerteil auf dieser Seite formschlüssig hintergreift und somit eine hinreichende axiale als auch radiale Abstützung gewährleistet ist.

Da das zweite Lagerteil und das dritte Lagerteil gegen ein Verdrehen aneinander gesichert sind, bilden die kugelabschnittförmigen Lagerflächen ausschließlich Stützflächen, wobei die zwischen dem ersten und dem zweiten Lagerteil angeordneten Lagerflächen die Gleitfunktion erfüllen.

Die Drehsicherung kann durch einen die Teilungsfläche zwischen den kugelabschnittförmigen Lagerflächen durchsetzenden Stift gebildet sein, der vorzugsweise in einem radialen Loch des zweiten Lagerteils sitzt und darin befestigt ist, z.B. durch einen Preßsitz. Der Stift kann jedoch auch in einem Loch des dritten Lagerteils fest eingesetzt sein. In dem jeweils anderen Lagerteil ist vorzugsweise ein sich in der Axialebene dieses Lagerteils erstreckendes Langloch für den Stift vorgesehen, so daß in der axialen Mittelebene begrenzt relative Schwenkbewegungen zwischen dem zweiten und dritten Lagerteil ausgeführt werden können, um bei der Montage den Stift in das Langloch einführen zu können oder bei der Demontage herausführen zu können.

Außerdem kann die innere kugelabschnittförmige Lagerfläche am dritten Lagerteil und die äußere ringförmige Gleitfläche am ersten Lagerteil jeweils an einem Funktionsteil, z.B. an einer Welle bzw. einem Gehäuse, der vorhandenen Maschine oder an einer zusätzlichen Lagerhülse ausgebildet sein, die in einfacher und kostengünstiger Weise besondere Lagerfunktionsmerkmale aufweisen kann. Hierzu kann sie z.B. aus besonderem Material bestehen, das sich für eine Lagerung gut eignet, oder als Verschleißteil austauschbar sein, so daß die Lebensdauer der übrigen Lagerteile durch einen Austausch der jeweils zusätzlichen Lagerhülse verlängerbar ist.

In weiteren Unteransprüchen sind Merkmale enthalten, die die Ausbildung des Drehgleitlagers bezüglich der Triebwelle als Los- oder Festlager ermöglichen, die Lebensdauer des Drehgleitlagers durch wirksam funktionierende Schmierungsmerkmale verbessern und außerdem zu einer einfachen, kleinen und kostengünstig herstellbaren Bauweise führen.

Nachfolgend werden vorteilhafte Ausgestaltungen des erfindungsgemäßen Drehgleitlagers anhand der Zeichnung näher erläutert. Es zeigt:
- Fig. 1: eine Axialkolbenmaschine im axialen Schnitt;
- Fig. 2: die in Fig. 1 mit II gekennzeichnete Einzelheit mit einem erfindungsgemäßen Drehgleitlager in vergrößerter Schnittdarstellung;
- Fig. 3: den Teilschnitt III-III in Fig. 2;
- Fig. 4: ein erfindungsgemäßes Drehgleitlager in perspektivischer Darstellung als Baugruppenteil, teilweise geschnitten;
- Fig. 5: das Drehgleitlager nach Fig. 4 in einer anderen Funktionsstellung;
- Fig. 6: das Drehgleitlager in einer Vormontagestellung;
- Fig. 7: ein äußeres Lagerteil des Drehgleitlagers im axialen Schnitt;
- Fig. 8: das Drehgleitlager in abgewandelter Ausgestaltung im axialen Schnitt;
- Fig. 9: das Drehgleitlager in weiter abgewandelter Ausgestaltung im axialen Schnitt;
- Fig 10: das Drehgleitlager in weiter abgewandelter Ausgestaltung im axialen Schnitt;
- Fig. 11: ein erfindungsgemäßes Drehgleitlager in abgewandelter Ausgestaltung in axialer Schnittdarstellung;
- Fig. 12: ein zweites und ein drittes Lagerteil des Drehgleitlagers in perspektivischer Darstellung;
- Fig. 13: einen Abschnitt des Drehgleitlagers in der Stirnansicht.

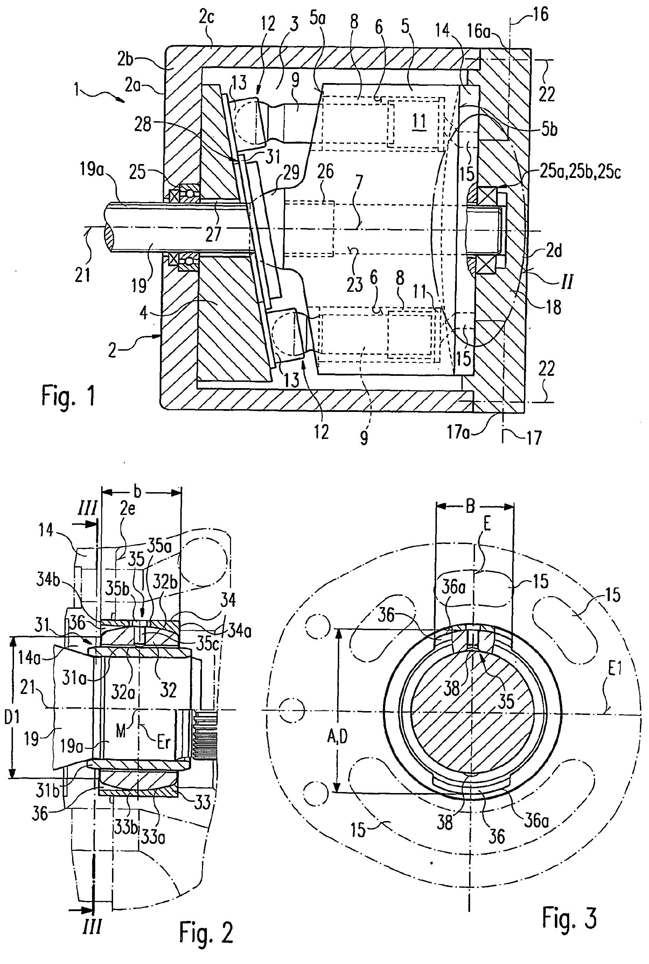

Die in Fig. 1 dargestellte, beispielhaft ausgebildete und in ihrer Gesamtheit mit 1 bezeichnete Kolbenmaschine weist ein Gehäuse 2 auf, in dessen Innenraum 3 eine Schrägscheibe 4 und eine Zylindertrommel 5 nebeneinander angeordnet sind. In der Zylindertrommel 5 sind auf dem Umfang verteilt Kolbenlöcher 6 angeordnet, die sich beim vorliegenden Ausführungsbeispiel einer Axialkolbenmaschine im wesentlichen parallel zu einer Mittelachse 7 der Zylindertrommel 5 erstrecken und an der der Schrägscheibe 4 zugewandten Stirnseite 5a der Zylindertrommel 5 offen sind. In den Buchsenlöchern 6 sind Führungsbuchsen 8 fest eingesetzt, vorzugsweise eingepreßt.

In den Führungsbuchsen 8 sind vorzugsweise zylindrische Kolben 9 im wesentlichen axial verschiebbar gelagert, die mit ihren Kolbenköpfen Arbeitskammern 11 in der Zylindertrommel 5 in Richtung auf die Schrägscheibe 4 begrenzen. Die der Schrägscheibe 4 zugewandten Fußenden der Kolben 9 sind jeweils durch ein Gelenk 12 an der Schrägscheibe 4 abgestützt, wobei Gleitschuhe 13 vorhanden sein können, zwischen denen und den Fußenden die vorzugsweise als Kugelgelenke mit einem Kugelkopf und einer Kugelausnehmung ausgebildeten Gelenke 12 angeordnet sind.

Die Zylindertrommel 5 liegt mit ihrer der Schrägscheibe 4 abgewandten Stirnseite an einer Steuerscheibe 14 an, in der wenigstens zwei Steueröffnungen 15 in Form von nierenförmigen Durchgangslöchern angeordnet sind, die Abschnitte von einer angedeuteten Zuführungsleitung 16 und einer Abführungsleitung 17 bilden, die sich durch eine benachbarte Gehäusewand 18 erstrecken, an der die Steuerscheibe 14 gehalten ist. Die Zylindertrommel 5 ist auf einer Triebwelle 19 angeordnet, die drehbar im Gehäuse 2 gelagert ist und deren Drehachse 21 koaxial zur Mittelachse 7 der Zylindertrommel 5 verläuft.

Beim vorliegenden Ausführungsbeispiel ist das Gehäuse 2 aus einem topfförmigen Gehäuseteil 2a mit einem Gehäuseboden 2b und einer Umfangswand 2c sowie einem die Gehäusewand 18 bildenden Deckel oder Anschlußteil 2d gebildet, der bzw. das am freien Rand der Umfangswand 2c anliegt und damit durch andeutungsweise dargestellte Schrauben 22 verschraubt ist. Zur Verbindung der weiterführenden Zuführungs- und Abführungsleitungen 16, 17 sind am Anschlußteil 2d Leitungsanschlüsse 16a, 17a vorgesehen. Die Triebwelle 19, die die Zylindertrommel 5 in einer Lagerbohrung durchsetzt, ist in Lagerausnehmungen des Gehäusebodens 2b und des Deckels 2d mittels geeigneten Lagern 25, 25a drehbar gelagert und abgedichtet, wobei sie den Gehäuseboden 2b axial durchsetzt und mit einem Triebzapfen 19a vom Gehäuseboden 2b absteht.

Beim Ausführungsbeispiel der Kolbenmaschine 1 als Schrägscheibenmaschine ist die Zylindertrommel 5 durch eine Drehmitnahmeverbindung 26, z. B. eine Zahnkupplung, drehfest auf der Triebwelle 19 angeordnet, wobei diese die z. B. fest am Gehäuseboden 2 angeordnete oder darin ausgebildete Schrägscheibe 4 in einem Durchgangsloch 27 durchsetzt. Beim vorliegenden Ausführungsbeispiel rotiert im Funktionsbetrieb die Zylindertrommel 5 relativ zur Schrägscheibe 4, wobei die Kolben 9 längs in Richtung auf die Arbeitskammern 11 und zurück verschoben werden.

Beim Ausführungsbeispiel ist das hintere, in der Gehäusewand 18 bzw. im Anschlußteil 2d gelagerte Lager 25a ein Drehgleitlager 25b, das mit einem kugelbeweglichen Drehgleitlager 25c kombiniert ist, so daß es in der Lage ist, die Triebwelle 19 drehbar zu lagern und außerdem Mängel in der Flucht der Lager 25, 25a und/oder Durchbiegungen der Triebwelle 19, die im Funktionsbetrieb auftreten, auszugleichen. Hierdurch sind Verkantungen im Drehgleitlager 25b vermieden oder vermindert, was die Gleitfunktion verbessert, die Reibung und die Erwärmung im Drehgleitlager 25b vermindert und die Lebensdauer vergrößert.

Das in vorbeschriebener Weise kombinierte kugelbewegliche Drehgleitlager 25c weist ein inneres erstes Lagerteil 31 mit einer äußeren ersten Gleitfläche 31a auf, mit der es in einem äußeren zweiten Lagerteil 32 mit einer inneren zweiten Gleitfläche 32a mit Gleitspiel drehbar gelagert ist. Infolgedessen umgibt das äußere zweite Lagerteil 32 das innere erste Lagerteil 31, wobei das äußere zweite Lagerteil 32 zumindest an seinem Außenumfang als Ring mit einer kugelzonenförmigen äußeren dritten Lagerfläche 32b gebildet ist, mit der es begrenzt kugelbeweglich ist. Das heißt es ist bezüglich der Drehachse 21 allseitig kippbar, in einem dritten Lagerteil 33 mit einer wenigstens teilweise entsprechend kugelabschnittförmig geformten inneren vierten Lagerfläche 33a gelagert.

Beim Ausführungsbeispiel sind das zweite Lagerteil 32 und das dritte Lagerteil 33 als Ringe ausgebildet, die z.B. eine gleichgroße axiale Breite b aufweisen können. Beim Ausführungsbeispiel ist das erste Lagerteil 31 breiter ausgebildet als das zweite und das dritte Lagerteil 32, 33, wobei es diese z.B. beidseitig überragt.

Außerdem ist beim Ausführungsbeispiel das erste Lagerteil 31 durch eine Lagerhülse 31b vorzugsweise hohlzylindrischen Querschnitts gebildet, die auf einem Lagerzapfen 19a der Triebwelle 19 drehfest angeordnet ist, z.B. mit Preßpassung auf dem Lagerzapfen 19a sitzt.

Das dritte Lagerteil 33 ist vorzugsweise ebenfalls eine Lagerhülse 33b, die drehfest im oder am sie tragenden Bauteil sitzt, hier am Deckel oder Anschlußteil 2d. Hierfür ist darin eine Lagerbohrung 34 für das runde dritte Lagerteil 33 vorgesehen, vorzugsweise mit einer durch eine Innenstufe gebildeten Schulterfläche 34a, die das dritte Lagerteil 33 axial nach außen begrenzt. Beim Ausführungsbeispiel erstreckt sich die Lagerbohrung 34 nach innen über die Teilungsfläche 2e zwischen dem Anschlußteil 2d und der Steuerscheibe 14 in letztere hinein, wobei vorzugsweise auch hier eine Schulterfläche 34b angeordnet ist, die das äußere Lagerteil 33 nach innen begrenzt, wodurch es axial formschlüssig positioniert ist. Bei dieser Ausgestaltung bildet die Lagerhülse 33b einen Zentrierzapfen für eine Zentrierung für die Steuerscheibe 14.

Die Ausführungsbeispiele nach Fig. 1 bis 9 und 11 bis 13 sind für eine Drehbewegung zwischen dem ersten und dem zweiten Lagerteil 31, 32 und für eine Kugelbewegung bzw. Kippbewegung zwischen dem zweiten und dem dritten Lagerteil 32, 33 eingerichtet. Um eine Drehbewegung um die Drehachse 21 zwischen dem zweiten und dem dritten Lagerteil 32, 33 zu verhindern, ist zwischen dem zweiten und dem dritten Lagerteil 32, 33 eine formschlüssig wirksame Drehsperrvorrichtung 35 mit einer Zapfenverbindung vorgesehen. Die Zapfenverbindung umfaßt einen von einem dieser beiden Lagerteile 32, 33 abstehenden und in ein Langloch 35a des anderen Lagerteils 32, 33 einfassenden Sperrzapfens 35b, wobei das Langloch 35a sich längs der Drehachse 21 erstreckt. Außerdem befinden sich das Langloch 35a und der Sperrzapfen 35b in der den Krümmungsmittelpunkt M enthaltenden Radialebene Er des betreffenden Lagerteils 32, 33. Infolgedessen ist eine Drehbewegung zwischen den Lagerteilen 32, 33 gesperrt, jedoch eine begrenzte allseitige Kippbewegung möglich, die die vorbeschriebenen Ausgleichsmaßnahmen erlaubt.

Der Sperrzapfen 35b kann durch einen runden Stift 35c gebildet sein, der in einer Bohrung in dem einen Lagerteil 32, 33 fest sitzt, z. B. eingepreßt ist, und mit seinem herausragenden, z.B. verdickten, Kopf in das Langloch 35a des anderen Lagerteils 32, 33 mit Bewegungsspiel einfaßt. Beim Ausführungsbeispiel ist das Stiftloch im zweiten Lagerteil 32 angeordnet und das Langloch 35a ist im dritten Lagerteil 33 angeordnet.

Der Sperrzapfen 35b ist vorzugsweise in der die Steueröffnungen 15 symmetrisch schneidenden Längsmittelebene E oder in der sich dazu rechtwinklig erstreckenden Längsmittelebene E1 angeordnet. Dies deshalb, weil die Summe der Kolbenkräfte eine in der Längsmittelebene E wirksame, resultierende Querkraft auf die Triebwelle 19 ausübt, die als Drehmoment eine geringe Biegung der Triebwelle 19 hervorrufen kann, die durch eine Kippbewegung in der Längsmittelebene E ausgeglichen wird. Diese Kippbewegung kann das kugelbewegliche Lager 25c in allen Querrichtungen problemlos ausführen, insbesondere dann, wenn das Langloch 35a sich in der Längsmittelebene E erstreckt oder auch dann, wenn es sich in der Längsmittelebene E1 befindet. In dieser Position erfolgt eine vorbeschriebene Kippbewegung um die sich quer erstreckende Mittelachse des Sperrzapfens 35b.

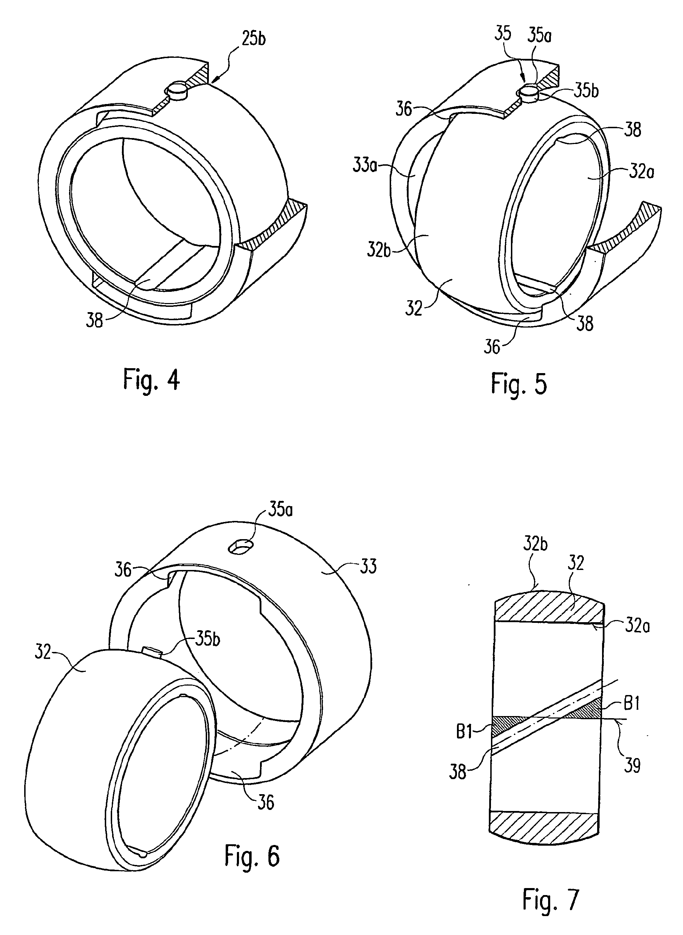

Das dritte Lagerteil 33 weist auf einer Seite eine axiale Einführungsnut 36 auf, die bezüglich ihren Querabmessungen A, B und ihrer Querschnittsform größer ausgebildet ist als die axiale Querschnittsgröße und -form des zweiten Lagerteils 32, so daß letzteres in einer winkelverdrehten Stellung, z.B. in einer um etwa 90° verdrehten Stellung, in die Einführungsnut 36 einführbar ist. Die axiale Länge der Einführungsnut 36 ist so groß bemessen, daß das zweite Lagerteil 32 in ihr in eine Zwischenstellung gemäß Fig. 5 schiebbar ist, in der die Krümmungsmittelpunkte der dritten und vierten Lagerfläche 32a, 33a im gemeinsamen Krümmungsmittelpunkt M liegen und sich deshalb überdecken. In dieser Stellung kann das zweite Lagerteil 32 in seine Endstellung gedreht werden, in der seine Längsmittelachse mit der Längsmittelachse des dritten Lagerteils 33 in etwa fluchtet. In dieser rückgedrehten Endstellung ist das zweite Lagerteil 32 durch den Hinterschnitt der kugelabschnittförmigen vierten Lagerfläche 33a axial formschlüssig im dritten Lagerteil 33 positioniert.

Beim Ausführungsbeispiel sind zwei Einführungsnuten 36 einander diametral gegenüberliegend und spiegelbildlich zueinander angeordnet, so daß das zweite Lagerteil 32 mittig in das dritte Lagerteil 33 eingeführt werden kann. Die einander gegenüberliegenden, im Querschnitt vorzugsweise entsprechend dem Durchmesser D des zweiten Lagerteils 32 gerundeten Grundflächen 36a der Einführungsnuten 36 sind vorzugsweise tangential zur kugelabschnittförmigen vierten Lagerfläche 33a ausgebildet, so daß sie mittig im dritten Lagerteil 33 auslaufen und in die kugelabschnittförmige vierte Lagerfläche 33a übergehen. Dies hat den besonderen Vorteil, daß das eingeführte zweite Lagerteil 32 an den den Einführungsnuten 36 axial gegenüberliegenden Abschnitten der kugelabschnittförmigen vierten Lagerfläche 33a Anschläge für die Einschubbewegung des zweiten Lagerteils 32 findet und zwar in der Zwischenstellung, in der die Krümmungsmittelpunkte einander decken und das zweite Lagerteil 32 drehbar ist. Hierdurch ist eine einfache und handhabungsfreundliche Montage gewährleistet. Das zweite Lagerteil 32 braucht nur bis zu einem Einschubanschlag bewegt und dann gedreht zu werden.

Beim Ausführungsbeispiel beträgt die Breite B der wenigstens einen Einführungsnut 36 etwa 1/2 bis 1/3 des Durchmessers D des zweiten Lagerteils 32. Bei dieser Größe sind neben der wenigstens einen Einführungsnut 36 hinreichend große Abschnitte der kugelabschnittförmigen vierten Lagerfläche 33a vorhanden, die den formschlüssigen Hintergriff in diese axiale Richtung gewährleisten.

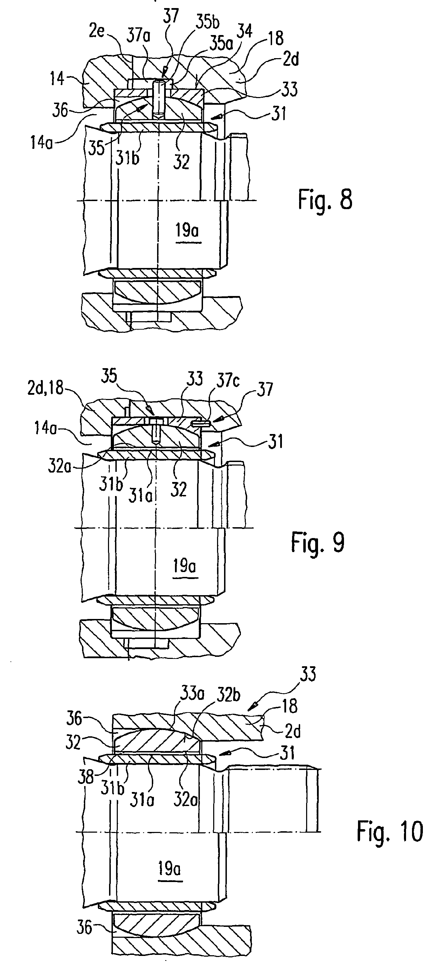

Zur Drehsicherung des dritten Lagerteils 33 in der Gehäusewand 18 kann eine Preßpassung zwischen dem Umfang des dritten Lagerteils 33 und der Wandung der Lagerbohrung 34 dienen. Beim Ausführungsbeispiel nach Fig. 8, bei dem gleiche oder vergleichbare Teile mit gleichen Bezugszeichen versehen sind, ist auch zur Drehsicherung des dritten Lagerteils 33 in der Gehäusewand 18 bzw. im Anschlußteil 2d eine formschlüssig wirksame Drehsperrvorrichtung 37 in Form einer Zapfenverbindung vorgesehen. Vorzugsweise dient hierzu der Sperrzapfen 35b, der das dritte Lagerteil 33 durchfaßt und in ein dem Langloch 35a im wesentlichen entsprechendes Langloch 37a in der Gehäusewand 18 einfaßt. Bei dieser Ausgestaltung ist nicht nur das zweite Lagerteil 32 sondern auch das dritte Lagerteil 33 gegen eine Verdrehung in der Umfangsrichtung formschlüssig an der Gehäusewand 18 positioniert.

Die Montage des zweiten Lagerteils 32 und das Einführen des Sperrzapfens 35b in das Langloch 35a erfolgt dadurch, daß das zweite Lagerteil 32 in einer Position eingeführt wird, in der es mit dem Sperrzapfen 35b bezüglich des Langlochs 35a soweit verdreht ist (Fig. 6), daß der Sperrzapfen 35b in die Einführungsnut 36 einführbar ist. Wenn der Sperrzapfen 35b sich im Bereich des Langlochs 35a befindet, wird das zweite Lagerteil 32 rückgedreht, wobei der Sperrzapfen 35b in das Langloch 35a eintaucht. Dies ist aufgrund der kugelabschnittförmigen Form des zweiten Lagerteils 32 problemlos möglich.

Auch beim Ausführungsbeispiel nach Fig. 8 ist es bei einer entsprechenden Bemessung möglich, den verlängerten Sperrzapfen 35b so in die Langlöcher 35a, 37a einzuführen, daß das zweite Lagerteil 32 verdreht eingeführt wird und dann rückgedreht wird, wie es für das Ausführungsbeispiel gemäß Fig. 2 bis 6 bereits beschrieben worden ist. Es ist jedoch auch möglich, daß das Langloch 37a zu der Seite hin, von der das dritte Lagerteil 33 in die Lagerbohrung 34 einschiebbar ist, ausläuft. Bei dieser Ausgestaltung kann das dritte Lagerteil 33 mit dem darin montierten zweiten Lagerteil 32 in die Lagerbohrung 34 eingeschoben werden, wobei gleichzeitig auch der Sperrzapfen 35b in das Langloch 37a eingeführt wird. Beim Ausführungsbeispiel gemäß Fig. 8 ist dies von der Innenseite her möglich, da das Langloch 37a zur Teilungsfläche 2e zwischen der Gehäusewand 18 und der Steuerscheibe 14 ausläuft und dieses kugelbewegliche Drehgleitlager 25c vor dem Anbau der Steuerscheibe an die Gehäusewand 18 oder vor dem Anbau der Gehäusewand 18 an die Steuerscheibe 14 montierbar ist.

Beim Ausführungsbeispiel nach Fig. 9, bei dem gleiche oder vergleichbare Teile mit gleichen Bezugszeichen versehen sind, ist eine andere Ausgestaltung der Drehsperrvorrichtung 37 vorgesehen, wobei die Drehsperrvorrichtung 35 entsprechend Fig. 8 ausgebildet sein kann. Gemäß Fig. 9 ist die Drehsperrvorrichtung 37 ebenfalls durch eine Zapfenverbindung gebildet, jedoch ist diese bezüglich der Drehachse 21 nicht quer sondern achsparallel angeordnet und durch einen Sperrstift 37c gebildet, der im Bereich der Stufenfläche angeordnet ist und in einander gegenüberliegenden Löchern in der Gehäusewand 18 und im dritten Lagerteil 33 einfaßt.

Das Ausführungsbeispiel nach Fig. 10, bei dem gleiche oder vergleichbare Teile ebenfalls mit gleichen Bezugszeichen versehen sind, macht deutlich, daß es eines separaten dritten Lagerteils 33 nicht bedarf, wenn die innere vierte Lagerfläche 33a und die wenigstens eine Einführungsnut 36 direkt an der Gehäusewand 18 bzw. dem Anschlußteil 2d ausgebildet sind. Auch bei diesem Ausführungsbeispiel können Sperrvorrichtungen im Sinne der Fig. 8 oder 9 vorgesehen sein, wobei das Langloch 35a in der Gehäusewand 18 angeordnet sein kann (nicht dargestellt).

Bei der vorliegenden Kolbenmaschine oder Axialkolbenmaschine 1 befindet sich im Innenraum 3 Hydraulikflüssigkeit, z.B. Hydrauliköl, die im Funktionsbetrieb zum Schmieren der Gleitflächen 31a, 32a und vorzugsweise auch der Lagerflächen 32b, 33a dienen kann. Als Schmierflüssigkeit eignet sich eine wasserhaltige Schmierflüssigkeit besonders gut, die etwa 50 % Wasser und etwa 50 % Glykol enthält und unter der Bezeichnung HFC im Fachbereich bekannt ist.

Um die Zugänglichkeit der im Innenraum 3 befindlichen Schmierflüssigkeit insbesondere zum Drehgleitlager 25b zu gewährleisten, ist es vorteilhaft, zwischen der Steuerscheibe 14 und der Triebwelle 19 einen axialen Durchgang 14a vorzusehen, der den Zugang der Schmierflüssigkeit wenigstens zum Drehgleitlager 25b gewährleistet. Beim Ausführungsbeispiel weist die Steuerscheibe 14 ein Durchführungsloch auf, das die Triebwelle 19 mit einem Ringabstand umgibt. Der Durchmesser D1 des Durchgangslochs ist vorzugsweise größer als der Außendurchmesser des ersten Lagerteils 31 bzw. der Lagerhülse 31b, so daß ein ringförmiger Zugang zu den Gleitflächen 31a, 33a und vorzugsweise auch zu den Lagerflächen 32b, 33a gewährleistet ist.

Zur weiteren Verbesserung der Schmierung ist es vorteilhaft, in wenigstens einer der Gleitflächen 33a, 32a, hier in der inneren zweiten Gleitfläche 32a eine oder mehrere auf dem Umfang verteilt angeordnete Schmiernuten 38 vorzusehen, die sich axial oder schräg bzw. wendelförmig erstrecken können, wie es Fig. 2 bis 7 zeigen. Bei einer schrägen oder wendelförmigen Anordnung der wenigstens einen Schmiernut 38 ergibt sich auf jeder axialen Seite des zweiten Lagerteils 32 ein tragender Bereich B1, der von dem zugehörigen Rand der Schmiernut 38 und einer sich axial erstreckenden Gleitflächenlinie 39 begrenzt ist.

Bei den vorbeschriebenen Ausführungsbeispielen ist das Drehgleitlager 25c bezüglich der Triebwelle 19 ein sogenanntes Loslager, d. h., es besteht keine gegenseitige axiale Abstützung zwischen der Triebwelle 19 bzw. dem darauf fest angeordneten ersten Lagerteil 31 und dem zweiten Lagerteil 32. Dagegen ist diese axiale Abstützung zwischen dem dritten Lagerteil 33 und dem Gehäuse 2 bzw. der das Drehgleitlager 25b aufnehmenden Gehäusewand 18 vorhanden. Es gibt jedoch auch Einsatzfälle, bei denen eine axiale Abstützung zwischen dem ersten und dem zweiten Lagerteil 31, 32 in wenigstens einer axialen Richtung gewünscht ist. Dies läßt sich dadurch erreichen, daß das zweite Lagerteil 32 an einer oder an beiden Seiten jeweils von einer Schulter- bzw. Gleitfläche begrenzt ist, die an der Triebwelle 19 oder einem Anbauteil derselben angeordnet ist. Ein solches, in wenigstens einer axialen Richtung als Festlager ausgebildetes Drehgleitlager kann mit zwei Lagerteilen 31, 32 als Drehgleitlager 25b oder mit dem zweiten und dem dritten Lagerteil 32, 33 als kippbares Drehgleitlager 25c ausgebildet sein und somit in einer oder in beiden axialen Richtungen Axialkräfte aufzunehmen.

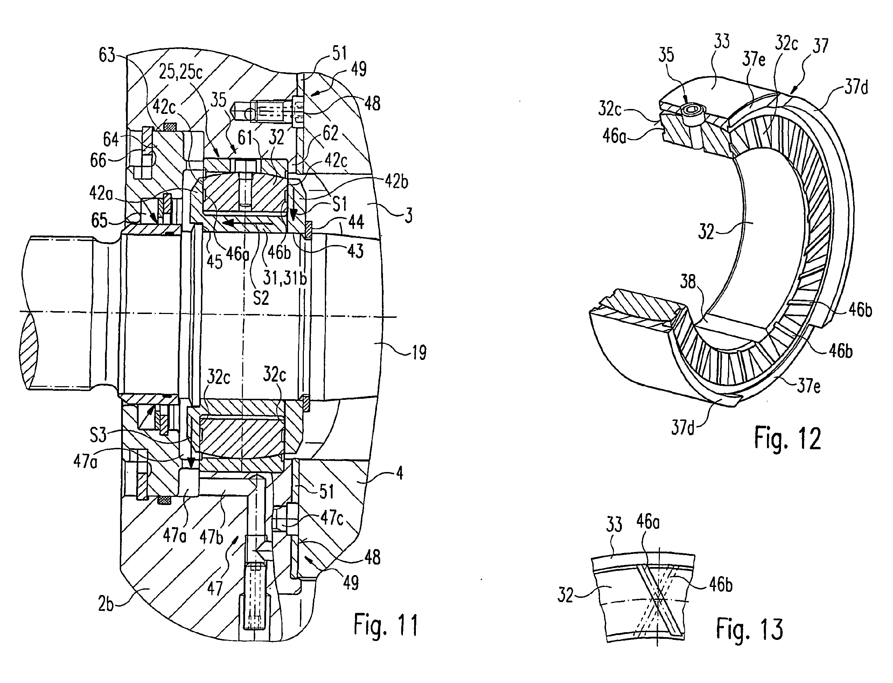

Beim Ausführungsbeispiel nach Fig. 11, bei dem gleiche oder vergleichbare Teile mit gleichen Bezugszeichen versehen sind, ist das Drehgleitlager 25c als in beide axialen Richtungen wirksames Festlager im Bereich des Gehäuses 2, hier im Gehäuseboden 2b, angeordnet, wobei es das im Anschlußteil 2d angeordnete Lager 25a oder vorzugsweise das im Gehäuseboden 2b angeordnete Lager 25 bilden kann, wie es Fig. 11 zeigt. Das zweite Lagerteil 32 ist an beiden Stirnseiten durch einen Stützflansch 42a, 42b mit Bewegungsspiel begrenzt, der axial an der Triebwelle 19 oder am ersten Lagerteil 31 fixiert ist. Beim Ausführungsbeispiel ist ein Stützflansch, hier der äußere Stützflansch 42a einteilig mit dem ersten Lagerteil 31 verbunden, wobei diese Teile einen winkelförmigen Ringkörper bilden, und der innere Stützflansch 42b weist ein koaxiales Loch 43 auf, mit dessen Lochrand er mit geringem Bewegungsspiel auf der Triebwelle 19 sitzt. Auf der dem Drehgleitlager 25c abgewandten Seite kann der Stützflansch 42b durch eine Triebwellenschulter 44 axial abgestützt sein, die beim Ausführungsbeispiel durch einen Federring gebildet ist, der in einer Ringnut in der Triebwelle 19 sitzt. Das erste Lagerteil 31 erstreckt sich vorzugsweise bis zur ihm zugewandten Fläche des zweiten Stützflansches 42b und es ist in der anderen axialen Richtung, hier nach außen, durch eine Triebwellenschulter 45 axial abgestützt, die als Flanschring einteilig von der Triebwelle 19 abstehen kann.

Zur Schmierung sind in den Schulter- bzw. Gleitflächen 42c der Stützflansche 42a, 42b (nicht dargestellt) oder in den Stirnflächen 32c des zweiten Lagerteils 32 jeweils eine oder mehrere auf dem Umfang verteilt angeordnete und von innen nach außen verlaufende Schmiernuten 46a, 46b vorgesehen, die radial innen mit einer Schmiermittelzuführungsleitung und radial außen mit einer Schmiermittelabführungsleitung in Verbindung stehen und somit Teil eines Schmiermittelkreislaufs 47 sind, der im Betrieb der Kolbenmaschine von einem Schmiermittel durchströmt wird, z. B. von Hydrauliköl. Um die Strömung im Schmiermittelkreislauf 47 aufrecht zu erhalten, bedarf es keiner besonderen Schmiermittelpumpe. Das sich im Betrieb in den Schmiernuten 46a, 46b befindliche Schmiermittel erzeugt die Strömung im Kreislauf 47 selbsttätig aufgrund der auf das Schmiermittel wirksamen Fliehkraft. Der Schmiermittelkreislauf 47 kann z. B. mit dem Innenraum 3 des Gehäuses 2 verbunden sein.

Eine zusätzliche Förderwirkung auf das Schmiermittel läßt sich dann erreichen, wenn die Schmiernuten 46a, 46b geneigt sind, insbesondere die Schmiernuten 46a auf der einen Seite und die Schmiernuten 46b auf der anderen Seite gegensinnig zueinander geneigt sind. Es können die sich im drehenden Lagerteil, hier in den Stützflanschen 42a, 42b, befindlichen Schmiernuten 46a (nicht dargestellt) der Drehrichtung des drehenden Lagerteils entgegengesetzt geneigt sein oder die sich im nicht drehenden Lagerteil, hier im zweiten Lagerteil 31, befindlichen Schmiernuten 46a, 46b in der Drehrichtung geneigt sind. Die Neigung kann auch spiralförmig sein. Bei diesen Ausgestaltungen wird eine forcierte Förderwirkung auf das Schmiermittel durch den Kontakt zwischen den Gleitflächen, hier den Stützflanschen 42a, 42b, und den sich in den Schmiernuten 46a, 46b befindlichen Schmiermittelsäulen erzeugt. Beim Ausführungsbeispiel, bei dem die Schmiernuten 46a, 46b im nichtdrehenden zweiten Lagerteil 32 angeordnet sind, wird die forcierte Förderwirkung durch den Kontakt erzeugt, den die Gleitflächen 42c des durch die Stützflansche 42a, 42b gebildeten drehenden ersten Lagerteils 31 erzeugt.

Beim Ausführungsbeispiel sind auf beiden Seiten des zweiten Lagerteils 32 angeordnete und zueinander gehörige Schmiernuten 46a, 46b mit der wenigstens einen Schmiernut 38 verbunden, die sich in der Außenmantelfläche des ersten Lagerteils 31 oder in der Innenmantelfläche des zweiten Lagerteils 32 befinden kann und sich dabei axial erstrecken kann, wie es z. B. Fig. 4 und 5 zeigen, oder schräg erstrecken kann, wie es Fig. 7 beispielsweise zeigt. Bei einem schrägen Verlauf der Schmiernut 38 wird die forcierte Förderwirkung auch im Bereich der Schmiernut 38 erzeugt. Die Förderwirkung wird durch den Kontakt erzeugt, den die dem Schmiermittel in der wenigstens einen Schmiernut 38 benachbarte Gleitfläche auf das Schmiermittel ausübt. Dabei sind die durch die gerade Schmiernut 38 miteinander verbundenen Schmiernuten 46a, 46b oder die durch eine schräge Schmiernut 38 miteinander verbundenen Schmiernunten 46a, 46b und auch die schräge Schmiernut 38 so ausgerichtet, daß die Förderwirkung in einander folgende Richtungen wirksam ist und sich eine in den Schmiernutenabschnitten 46b, 38, 46a durchgehende Förderwirkung ergibt. Im Betrieb tritt dann das Schmiermittel am radial äußeren Ende der Schmiernut oder Schmiernuten auf der einen Seite ein und am radial äußeren Ende der Schmiernut oder Schmiernuten auf der anderen Seite aus. Der axiale Verlauf der Förderwirkung bzw. der Förderrichtung nach außen oder nach innen ist abhängig von der Drehrichtung der Triebwelle 19 bzw. des ersten Lagerteils 31.

Beim Ausführungsbeispiel ist der Schmiermittelkreislauf 47 dadurch gebildet, daß die innenseitigen Schmiermittelnuten 46b radial außen zum Innenraum 3 offen sind. Die außenseitigen Schmiernuten 46a sind ebenfalls radial außen offen und sie können durch einen nicht dargestellten Schmiermittelkanal ebenfalls mit dem Innenraum 3 verbunden sein.

Fig. 11 zeigt eine Ausgestaltung, bei der in den Schmiermittelkreislauf 47 zusätzlich eine Schwenklagerschmierung für eine an sich bekannte schwenkbare Schrägscheibe 4 einbezogen ist. Bei dieser Ausgestaltung münden die Schmiermittelnuten 46a radial außen in einen vorzugsweise ringförmigen Spalt oder Schmiermittelkanalabschnitt 47a, von dem sich im Gehäuseboden 2b ein weiterführender Schmiermittelkanal 47b z. B. winkelförmig zur Gleitlagerfläche 48 eines Schwenklagers 49 für die bei diesem Ausführungsbeispiel schwenkbar gelagerte Schrägscheibe 4 erstreckt und dabei eine Lagerschale 51 des Schwenklagers 49 durchsetzt. Das bezüglich der Drehachse 7 der Triebwelle 19 auf der anderen Seite der Kolbenmaschine 1 angeordnete Schwenklager 49 kann in gleicher Weise an den Schmiermittelkreislauf 47 angeschlossen sein, was aus Vereinfachungsgründen nicht dargestellt ist.

Beim Ausführungsbeispiel sind die Strömungsrichtungen der Kreislaufströmung im Bereich des Drehgleitlagers 25c ausgehend von den Öffnungen der Schmierkanäle 46b zunächst radial einwärts dann axial auswärts und dann radial auswärts gerichtet, siehe S1, S2, S3.

Fig. 13 zeigt die einander entgegengesetzt geneigten Schmiernuten 46a, 46b auf beiden Seiten des zweiten Lagerteils 32.

Beim Ausführungsbeispiel nach Fig. 12 ist eine axial wirksame Drehsicherung 37 dadurch gebildet, daß vom Ringkörper des dritten Lagerteils 33 ein oder mehrere z. B. zwei einander gegenüberliegende Segmente 37d axial vorragen, die mit mittelbar oder unmittelbar am Gehäuse 2 bzw. Gehäuseboden 2b angeordneten Positionierausnehmungen, in die sie einfassen oder ein oder mehrere Positionierzapfen, die in die wenigstens eine, zwischen zwei Segmenten vorhandene Ausnehmung 37e einfassen, zwecks Drehsicherung formschlüssig zusammenwirken.

Beim Ausführungsbeispiel sitzt das Drehgleitlager 25c mit seinem dritten Lagerteil 33 in einer Lagerbohrung 61, die innenseitig eine Anschlagschulter 62 für das dritte Lagerteil 33 aufweist und nach außen stufenförmig erweitert ist, wobei in der größeren Bohrungsstufe 63 ein Verschlußring 64 mit einer Ringdichtung 65 für die Triebwelle 19 eingesetzt und durch einen Sicherungsring 66 axial gesichert ist.

## Patentansprüche

1. Kolbenmaschine (1), mit einem Gehäuse (2), in dem eine Triebwelle (19) durch ein Drehgleitlager (25b) drehbar gelagert ist, das ein inneres erstes Lagerteil (31) mit einer äußeren ersten Lagerfläche (31a) und ein äußeres zweites Lagerteil (32) mit einer inneren zweiten Lagerfläche (32a) aufweist,
wobei das innere erste Lagerteil (31) drehfest auf der Triebwelle (19) angeordnet ist und das äußere Lagerteil (32) einteilig ausgebildet ist und das innere Lagerteil (31) mit Gleitspiel umgibt,
wobei das äußere Lagerteil (32) an seinem Außenumfang als Ring mit einer kugelabschnittförmigen dritten Lagerfläche (32b) ausgebildet ist, mit der es begrenzt kugelbeweglich in einem dritten Lagerteil (33) mit einer kugelabschnittförmigen inneren vierten Lagerfläche (33a) gelagert ist, die die dritte Lagerfläche (32b) umgibt,
wobei auf einer Seite des dritten Lagerteils (33) zumindest eine Einführungsnut (36) angeordnet ist, in der das zweite Lagerteil (32) in einer winkelverdrehten Stellung bis in eine Stellung in das dritte Lagerteil (33) einführbar ist, in der die Krümmungsmittelpunkte (M) der dritten und vierten Lagerfläche (32b, 33a) einander im wesentlichen decken,
und wobei zwischen dem zweiten und dem dritten Lagerteil (32, 33) eine Drehsperrvorrichtung (35) angeordnet ist.

2. Kolbenmaschine nach Anspruch 1,
**dadurch gekennzeichnet,**
**daß** das zweite Lagerteil (32) an einer oder an beiden Seiten jeweils durch einen Stützflansch (42a, 42b) axial gestützt ist, der am ersten Lagerteil (31) oder an einem das erste Lagerteil (31) lagernden Bauteil in die dem zweiten Lagerteil (32) abgewandte Achsrichtung abgestützt ist.

3. Drehgleitlagerung, mit einem Gehäuse (2), in dem eine Triebwelle (19) durch ein Drehgleitlager (25b) drehbar gelagert ist, das ein inneres erstes Lagerteil (31) mit einer äußeren ersten Lagerfläche (31a) und ein äußeres zweites Lagerteil (32) mit einer inneren zweiten Lagerfläche (32a) aufweist,
wobei das innere erste Lagerteil (31) drehfest auf der Triebwelle (19) angeordnet ist und das äußere Lagerteil (32) einteilig ausgebildet ist und das innere Lagerteil (31) mit Gleitspiel umgibt,
wobei das äußere Lagerteil (32) an seinem Außenumfang als Ring mit einer kugelabschnittförmigen dritten Lagerfläche (32b) ausgebildet ist, mit der es begrenzt kugelbeweglich in einem dritten Lagerteil (33) mit einer kugelabschnittförmigen inneren vierten Lagerfläche (33a) gelagert ist, die die dritte Lagerfläche (32b) umgibt,
wobei auf einer Seite des dritten Lagerteils (33) zumindest eine Einführungsnut (36) angeordnet ist, in der das zweite Lagerteil (32) in einer winkelverdrehten Stellung bis in eine Stellung in das dritte Lagerteil (33) einführbar ist, in der die Krümmungsmittelpunkte (M) der dritten und vierten Lagerfläche (32b, 33a) einander im wesentlichen decken,
wobei zwischen dem zweiten und dem dritten Lagerteil (32, 33) eine Drehsperrvorrichtung (35) angeordnet ist,
und wobei das zweite Lagerteil (32) an einer Seite durch einen Stützflansch (42a) axial gestützt ist, der einteilig mit dem ersten Lagerteil (31) verbunden und in die dem zweiten Lagerteil (32) abgewandte Achsrichtung abgestützt ist.

4. Drehgleitlagerung nach Anspruch 3,
**dadurch gekennzeichnet,**
**dass** an der dem Stützflansch (42a) abgewandten Seite des zweiten Lagerteils (32) ein weiterer Stützflansch (42b) angeordnet und am ersten Lagerteil (31) oder an einem das erste Lagerteil (31) lagernden Bauteil in die dem zweiten Lagerteil (32) abgewandte Achsrichtung abgestützt ist.

5. Kolbenmaschine nach einem der vorherigen Ansprüche 1 oder 2 oder Drehgleitlagerung nach Anspruch 3 oder 4,
**dadurch gekennzeichnet,**
**daß** in der Lagerfläche (32a) des ersten oder zweiten Lagerteils (31, 32) eine oder mehrere Schmiernuten (38) angeordnet sind, die axial oder schräg angeordnet sind und vorzugsweise an beiden Enden seitlich auslaufen.

6. Kolbenmaschine nach einem der Ansprüche 1, 2 oder 5 oder Drehgleitlagerung nach einem der Ansprüche 3 bis 5,
**dadurch gekennzeichnet,**
**daß** in der oder den Gleitflächen (42c, 32c) des zweiten Lagerteils (32) und/oder des wenigstens einen Stützflansches (42a, 42b) jeweils eine oder mehrere Schmiernuten (46a, 46b) vorgesehen ist bzw. sind.

7. Kolbenmaschine oder Drehgleitlagerung nach Anspruch 6,
**dadurch gekennzeichnet,**
**daß** die wenigstens eine Schmiernut (46a, 46b) radial oder bezüglich der Umfangsrichtung geneigt angeordnet ist.

8. Kolbenmaschine oder Drehgleitlagerung nach Anspruch 7,
**dadurch gekennzeichnet,**
**daß** die sich zwischen dem zweiten Lagerteil (32) und den Stützflanschen (42a, 42b) befindlichen Schmiernuten (46a, 46b) auf der einen Seite in die eine Umfangsrichtung und auf der anderen Seite in die andere Umfangsrichtung geneigt sind.

9. Kolbenmaschine oder Drehgleitlagerung nach einem der vorherigen Ansprüche 4 bis 8,
**dadurch gekennzeichnet,**
**daß** die Schmiernuten (46a, 46b, 38) miteinander verbunden sind und einen Teil eines Strömungskreislaufs (47) bilden.

10. Drehgleitlagerung, mit einem Gehäuse (2), in dem eine Triebwelle (19) durch ein Drehgleitlager (25b) drehbar gelagert ist, das ein inneres erstes Lagerteil (31) mit einer äußeren ersten Lagerfläche (31a) und ein äußeres zweites Lagerteil (32) mit einer inneren zweiten Lagerfläche (32a) aufweist,
wobei das innere erste Lagerteil (31) drehfest auf der Triebwelle (19) angeordnet ist und das äußere Lagerteil (32) einteilig ausgebildet ist und das innere Lagerteil (31) mit Gleitspiel umgibt,
wobei das äußere Lagerteil (32) an seinem Außenumfang als Ring mit einer kugelabschnittförmigen dritten Lagerfläche (32b) ausgebildet ist, mit der es begrenzt kugelbeweglich in einem dritten Lagerteil (33) mit einer kugelabschnittförmigen inneren vierten Lagerfläche (33a) gelagert ist, die die dritte Lagerfläche (32b) umgibt,
wobei auf einer Seite des dritten Lagerteils (33) zumindest eine Einführungsnut (36) angeordnet ist, in der das zweite Lagerteil (32) in einer winkelverdrehten Stellung bis in eine Stellung in das dritte Lagerteil (33) einführbar ist, in der die Krümmungsmittelpunkte (M) der dritten und vierten Lagerfläche (32b, 33a) einander im wesentlichen decken,
wobei zwischen dem zweiten und dem dritten Lagerteil (32, 33) eine Drehsperrvorrichtung (35) angeordnet ist,
wobei das zweite Lagerteil (32) an beiden Seiten jeweils durch einen Stützflansch (42a, 42b) axial gestützt ist, der am ersten Lagerteil (31) oder an einem das erste Lagerteil (31) lagernden Bauteil in die dem zweiten Lagerteil (32) abgewandte Achsrichtung abgestützt ist,
wobei in der Lagerfläche (32a) des ersten oder zweiten Lagerteils (31, 32) eine oder mehrere Schmiernuten (38) angeordnet sind, die axial oder schräg angeordnet sind und an beiden Enden seitlich auslaufen,
wobei in den Gleitflächen (42c, 32c) des zweiten Lagerteils (32) und/oder der Stützflansche (42a, 42b) jeweils eine oder mehrere Schmiernuten (46a, 46b) vorgesehen ist bzw. sind,
wobei die sich zwischen dem zweiten Lagerteil (32) und den Stützflanschen (42a, 42b) befindlichen Schmiernuten (46a, 46b) auf der einen Seite in die eine Umfangsrichtung und auf der anderen seite in die andere Umtangsrichtung geneigt sind,
und wobei die Schmiernuten (46a, 46b, 38) miteinander verbunden sind und einen Teil eines Strömungskreislaufs (47) bilden.

11. Kolbenmaschine oder Drehgleitlagerung jeweils nach einem der vorherigen Ansprüche,
**dadurch gekennzeichnet,**
**daß** zwei Einführungsnuten (36) einander gegenüberliegend angeordnet sind.

12. Kolbenmaschine oder Drehgleitlagerung nach Anspruch 11,
**dadurch gekennzeichnet,**
**daß** die Grundflächen (36a) der Einführungsnuten (36) tangential in die kugelabschnittförmige vierte Lagerfläche (33a) auslaufen.

13. Kolbenmaschine nach einem der vorherigen Ansprüche 1, 2 oder 5 bis 9 oder Drehgleitlagerung nach einem der vorherigen Ansprüche 3 bis 12,
**dadurch gekennzeichnet,**
**daß** die Breite (B) der Einführungsnut (36) etwa 1/3 bis 1/2 des Durchmessers (D) des zweiten Lagerteils (32) beträgt und die Breite (b) des zweiten Lagerteils (32) wenigstens unter Berücksichtigung eines Bewegungsspiels kleiner ist als die Breite (B) der Einführungsnut (36).

14. Kolbenmaschine nach einem der vorherigen Ansprüche 1, 2 oder 5 bis 9 oder Drehgleitlagerung nach einem der vorherigen Ansprüche 3 bis 13,
**dadurch gekennzeichnet,**
**daß** die Drehsperrvorrichtung (35) durch eine Zapfenverbindung zwischen dem zweiten und dem dritten Lagerteil (32, 33) gebildet ist und ein an dem einen Lagerteil (32) befestigter Sperrzapfen (35b) mit axialem Bewegungsspiel in eine vorzugsweise durch ein axiales Langloch (35a) gebildete Ausnehmung im anderen Lagerteil (33) einfaßt.

15. Kolbenmaschine nach einem der vorherigen Ansprüche 1, 2 oder 5 bis 9 oder Drehgleitlagerung nach einem der vorherigen Ansprüche 3 bis 14,
**dadurch gekennzeichnet,**
**daß** das dritte Lagerteil (33) ein hülsenförmiges Lagerteil ist, das in einer Lagerbohrung (34) eines zusätzlichen Lagerteils sitzt.

16. Kolbenmaschine oder Drehgleitlagerung nach Anspruch 15,
**dadurch gekennzeichnet,**
**daß** das zusätzliche Lagerteil durch ein Anschlußteil (2d) einer Kolbenmaschine, insbesondere einer Axialkolbenmaschine (1), gebildet ist.

17. Kolbenmaschine oder Drehgleitlagerung nach Anspruch 16,
**dadurch gekennzeichnet,**
**daß** das hülsenförmige Lagerteil innenseitig durch eine Steuerscheibe (14) begrenzt ist, die an der Innenseite des Anschlußteils (2d) angeordnet ist.

18. Kolbenmaschine oder Drehgleitlagerung nach Anspruch 16 oder 17,
**dadurch gekennzeichnet,**
**daß** an der Innenseite des Anschlußteils (2d) eine Steuerscheibe (14) angeordnet ist, wobei in der Steuerscheibe (14), oder zwischen der Steuerscheibe (14) und einer das erste Lagerteil (31) tragenden Triebwelle (19) ein axialer Durchgang (14a) für eine Schmierflüssigkeit vorgesehen ist.

## Claims

1. Piston engine (1), with a housing (2), in which a drive shaft (19) is mounted such as to rotate by means of a swivel slide bearing (25b), which has an inner first bearing part (31) with an outer first bearing surface (31a) and an outer second bearing part (32) with an inner second bearing surface (32a),
whereby the inner first bearing part (31) is arranged in a torsionally-resistant manner on the drive shaft (19) and the outer bearing part (32) is designed as one piece and surrounds the inner bearing part (31) with slide play,
whereby the outer bearing part (32) is formed at its outer circumference as a ring with a spherical segment-shaped third bearing surface (32b), with which it is mounted with limited spherical movement in a third bearing part (33) with a spherical segment-shaped inner fourth bearing surface (33a), which surrounds the third bearing surface (32b),
whereby on one side of the third bearing part (33) at least one entry guide slot (36) is arranged, into which the second bearing part (32) can be introduced in an angle-rotated position as far as into a position into the third bearing (33), in which the curvature mid-points (M) of the third and fourth bearing surfaces (32b, 33a) essentially cover one another,
and whereby a rotation blocking device (35) is arranged between the second and third bearing parts (32, 33).

2. Piston engine according to Claim 1,
**characterised in that**
the second bearing part (32) is supported axially on one or both sides in each case by a support flange (42a, 42b), which is supported at the first bearing part (31) or at a component mounting the first bearing part (31) in the axial direction turned away from the second bearing part (32).

3. Swivel slide bearing, with a housing (2), in which a drive shaft (19) is mounted such as to rotate by means of a swivel slide bearing (25b), which has an inner first bearing part (31) with an outer first bearing surface (31a) and an outer second bearing part (32) with an inner second bearing surface (32a),
whereby the inner first bearing part (31) is arranged in a torsionally-resistant manner on the drive shaft (19) and the outer bearing part (32) is designed as one piece and surrounds the inner bearing part (31) with slide play,
whereby the outer bearing part (32) is formed at its outer circumference as a ring with a spherical segment-shaped third bearing surface (32b), with which it is mounted with limited spherical movement in a third bearing part (33) with a spherical segment-shaped inner fourth bearing surface (33a), which surrounds the third bearing surface (32b),
whereby on one side of the third bearing part (33) at least one entry guide slot (36) is arranged, into which the second bearing part (32) can be introduced in an angle-rotated position as far as into a position into the third bearing (33), in which the curvature mid-points (M) of the third and fourth bearing surfaces (32b, 33a) essentially cover one another,
whereby a rotation blocking device (35) is arranged between the second and third bearing parts (32, 33),
and whereby the second bearing part (32) is supported axially on one side by a support flange (42a), which is connected to the first bearing part (31) as one piece and is supported in the axial direction turned away from the second bearing part (32).

4. Swivel slide bearing according to Claim 3,
**characterised in that**
a further support flange (42b) is arranged on the side of the second bearing part (32) turned away from the support flange (42a), and which further support flange (42b) is supported at the first bearing part (31) or at a component mounting the first bearing part (31) in the axial direction turned away from the second bearing part (32).

5. Piston engine according to one of the foregoing Claims 1 or 2, or swivel slide bearing according to Claim 3 or 4,
**characterised in that**
one or more lubrication grooves (38) are arranged in the bearing surface (32a) of the first or second bearing part (31, 32), which are arranged axially or obliquely, and for preference run out laterally at both ends.

6. Piston engine according to one of Claims 1, 2 or 5, or swivel slide bearing according to one of Claims 3 to 5,
**characterised in that**
in each case one or more lubrication grooves (46a, 46b) is/are provided in the sliding surface(s) (42c, 32c) of the second bearing part (32) and/or of the at least one support flange (42a, 42b).

7. Piston engine or swivel slide bearing according to Claim 6,
**characterised in that**
the at least one lubrication groove (46a, 46b) is arranged radially or inclined at an angle in relation to the circumferential direction.

8. Piston engine or swivel slide bearing according to Claim 7,
**characterised in that**
the lubrication grooves (46a, 46b) located between the second bearing part (32) and the support flanges (42a, 42b) are inclined on one side in one circumferential direction, and on the other side in the other circumferential direction.

9. Piston engine or swivel slide bearing according to one of the foregoing Claims 4 to 8, **characterised in that**
the lubrication grooves (46a, 46b, 38) are connected to one another and form a part of a flow circuit (47).

10. Swivel slide bearing, with a housing (2), in which a drive shaft (19) is mounted such as to rotate by means of a swivel slide bearing (25b), which has an inner first bearing part (31) with an outer first bearing surface (31a) and an outer second bearing part (32) with an inner second bearing surface (32a),
whereby the inner first bearing part (31) is arranged in a torsionally-resistant manner on the drive shaft (19) and the outer bearing part (32) is designed as one piece and surrounds the inner bearing part (31) with slide play,
whereby the outer bearing part (32) is formed at its outer circumference as a ring with a spherical segment-shaped third bearing surface (32b), with which it is mounted with limited spherical movement in a third bearing part (33) with a spherical segment-shaped inner fourth bearing surface (33a), which surrounds the third bearing surface (32b),
whereby on one side of the third bearing part (33) at least one entry guide slot (36) is arranged, into which the second bearing part (32) can be introduced in an angle-rotated position as far as into a position into the third bearing part (33), in which the curvature mid-points (M) of the third and fourth bearing surfaces (32b, 33a) essentially cover one another,
whereby a rotation blocking device (35) is arranged between the second and third bearing parts (32, 33),
whereby the second bearing part (32) is supported axially on both sides in each case by a support flange (42a, 42b), which is supported at the first bearing part (31) or at a component mounting the first bearing part (31) in the axial direction turned away from the second bearing part (32),
whereby, one or more lubrication grooves (38) are arranged in the bearing surface (32a) of the first or second bearing part (31, 32), which are arranged axially or obliquely, and for preference run out laterally at both ends,
whereby, in each case one or more lubrication grooves (46a, 46b) is/are provided in the sliding surfaces (42c, 32c) of the second bearing part (32) and/or of the support flange (42a, 42b),
whereby, the lubrication grooves (46a, 46b) located between the second bearing part (32) and the support flanges (42a, 42b) are inclined on one side in one circumferential direction, and on the other side in the other circumferential direction,
and whereby, the lubrication grooves (46a, 46b, 38) are connected to one another and form a part of a flow circuit (47).

11. Piston engine or swivel side bearing in each case according to one of the foregoing Claims, **characterised in that**
two entry guide slots (36) are arranged opposite one another.

12. Piston engine or swivel slide bearing according to Claim 11,
**characterised in that**
the base surfaces (36a) of the entry guide slots (36) run out tangentially into the spherical segment-shaped fourth bearing surface (33a).

13. Piston engine according to one of the foregoing Claims 1, 2 or 5 to 9, or swivel slide bearing according to one of the foregoing Claims 3 to 12,
**characterised in that**
the width (B) of the entry guide slot (36) amounts to some 1/3 to 1/2 of the diameter (D) of the second bearing part (32), and the width (b) of the second bearing part (32), at least in respect of a movement play, is smaller than the width (B) of the entry guide slot (36).

14. Piston engine according to one of the foregoing Claims 1, 2 or 5 to 9, or swivel slide bearing according to one of the foregoing Claims 3 to 13,
**characterised in that**
the rotation blocking device (35) is formed by a journal connection between the second and third bearing parts (32, 33) and a blocking journal (35b) secured to a bearing part (32) with axial movement play engages into a recess in the other bearing part (33), formed for preference by an axial longitudinal hole (35a).

15. Piston engine according to one of the foregoing Claims 1, 2 or 5 to 9, or swivel slide bearing according to one of the foregoing Claims 3 to 14,
**characterised in that**
**that** the third bearing part (33) is a bushing-shaped bearing part, which locates in a bearing hole (34) of an additional bearing part.

16. Piston engine or swivel slide bearing according to Claim 15,
**characterised in that**
the additional bearing part is formed by a connection part (2d) of a piston engine, in particular of an axial piston engine (1).

17. Piston engine or swivel slide bearing according to Claim 16,
**characterised in that**
the bushing-shaped bearing part is delimited on the inside by a control disk (14), which is arranged on the inner side of the connection part (2d).

18. Piston engine or swivel slide bearing according to Claim 16 or 17,
**characterised in that**
a control disk (14) is arranged on the inner side of the connection part (2d), whereby an axial passage (14a) for a lubricant fluid is provided in the control disk (14) or between the control disk (14) and a drive shaft (19) carrying the first bearing part (31).

## Revendications

1. Machine à piston (1), dotée d'un carter (2) dans lequel un arbre d'entraînement (19) est supporté de manière rotative par un palier lisse pivotant (25b) qui présente une première partie de palier interne (31) avec une première surface de palier externe (31a) et une deuxième partie de palier externe (32) avec une deuxième surface de palier interne (32a),
la première partie de palier interne (31) étant disposée de façon fixe en rotation sur l'arbre d'entraînement (19) et la partie de palier externe (32) étant formée d'une seule pièce et entourant la partie de palier interne (31) avec un jeu de coulissement,
la partie de palier externe (32) étant constituée à sa périphérie externe sous forme d'une bague dotée d'une troisième surface de palier (32b) en forme de segment sphérique, avec laquelle elle est supportée, avec un mouvement sphérique limité, dans une troisième partie de palier (33) dotée d'une quatrième surface de palier interne (33a) en forme de segment sphérique qui entoure la troisième surface de palier (32b),
au moins une rainure d'introduction (36) étant disposée sur un côté de la troisième partie de palier (33), rainure dans laquelle la deuxième partie de palier (32) peut être introduite dans une position décalée angulairement jusque dans une position située dans la troisième partie de palier (33), dans laquelle les centres de courbure (M) des troisième et quatrième surfaces de palier (32b, 33a) se superposent sensiblement l'un l'autre,
et un dispositif de blocage en rotation (35) étant disposé entre les deuxième et troisième parties de palier (32, 33).

2. Machine à piston selon la revendication 1,
**caractérisée en ce que**
la deuxième partie de palier (32) est en appui axialement d'un côté ou des deux côtés respectivement au moyen d'une bride de support (42a, 42b), qui est en appui sur la première partie de palier (31) ou sur une pièce supportant la première partie de palier (31) dans la direction axiale opposée à la deuxième partie de palier (32).

3. Palier lisse pivotant doté d'un carter (2) dans lequel un arbre d'entraînement (19) est supporté de manière rotative par un palier lisse pivotant (25b) qui présente une première partie de palier interne (31) avec une première surface de palier externe (31a) et une deuxième partie de palier externe (32) avec une deuxième surface de palier interne (32a),
la première partie de palier interne (31) étant disposée de façon fixe en rotation sur l'arbre d'entraînement (19) et la partie de palier externe (32) étant formée d'une seule pièce et entourant la partie de palier interne (31) avec un jeu de coulissement,
la partie de palier externe (32) étant constituée à sa périphérie externe sous forme d'une bague dotée d'une troisième surface de palier (32b) en forme de segment sphérique avec laquelle elle est supportée, avec un mouvement sphérique limité, dans une troisième partie de palier (33) dotée d'une quatrième surface de palier interne (33a) en forme de segment sphérique qui entoure la troisième surface de palier (32b), au moins une rainure d'introduction (36) étant disposée sur un côté de la troisième partie de palier (33), rainure dans laquelle la deuxième partie de palier (32) peut être introduite dans une position décalée angulairement jusque dans une position située dans la troisième partie de palier (33), dans laquelle les centres de courbure (M) des troisième et quatrième surfaces de palier (32b, 33a) se superposent sensiblement l'un l'autre,
un dispositif de blocage en rotation (35) étant disposé entre les deuxième et troisième parties de palier (32, 33).
et la deuxième partie de palier (32) étant en appui axialement d'un côté au moyen d'une bride de support (42a), qui est raccordée en ne formant qu'une seule pièce à la première partie de palier (31) et est en appui dans la direction axiale opposée à la deuxième partie de palier (32).

4. Palier lisse pivotant selon la revendication 3,
**caractérisé en ce que**
sur le côté de la deuxième partie de palier (32) opposé à la bride de support (42a) est agencée une autre bride de support (42b) et elle est en appui sur la première partie de palier (31) ou sur une pièce logeant la première partie de palier (31) dans la direction axiale opposée à la deuxième partie de palier (32).

5. Machine à piston selon l'une des précédentes revendications 1 ou 2 ou palier lisse pivotant selon la revendication 3 ou 4,
**caractérisé(e) en ce que**
dans la surface de palier (32a) de la première ou de la deuxième partie de palier (31, 32) sont prévues une ou plusieurs rainures de graissage (38) qui sont disposées axialement ou en biais et s'étendent de préférence latéralement aux deux extrémités.

6. Machine à piston selon l'une des revendications 1, 2 ou 5 ou palier lisse pivotant selon l'une des revendications 3 à 5,
**caractérisé(e) en ce que**
dans chacune de la ou des surfaces de glissement (42c, 32c) de la deuxième partie de palier (32) et/ou la au moins une bride de support (42a, 42b) est et/ou sont prévue(s) une ou plusieurs rainures de graissage (46a, 46b).

7. Machine à piston ou palier lisse pivotant selon la revendication 6,
**caractérisé(e) en ce que**
la au moins une rainure de graissage (46a, 46b) est disposée radialement ou inclinée par rapport à la direction circonférentielle.

8. Machine à piston ou palier lisse pivotant selon la revendication 7,
**caractérisé(e) en ce que**
les rainures de graissage (46a, 46b) se trouvant entre la deuxième partie de palier (32) et les brides de support (42a, 42b) sont inclinées d'un côté dans la direction circonférentielle et de l'autre côté dans l'autre direction circonférentielle.

9. Machine à piston ou palier lisse pivotant selon l'une des précédentes revendications 4 à 8,
**caractérisé(e) en ce que**
les rainures de graissage (46a, 46b, 38) sont reliées ensemble et forment une partie d'un circuit fermé d'écoulement (47).

10. Palier lisse pivotant, doté d'un carter (2) dans lequel un arbre d'entraînement (19) est supporté de manière rotative par un palier lisse pivotant (25b) qui présente une première partie de palier interne (31) avec une première surface de palier externe (31a) et une deuxième partie de palier externe (32) avec une surface de palier interne (32a),
la première partie de palier interne (31) étant disposée de façon fixe en rotation sur l'arbre d'entraînement (19) et la partie de palier externe (32) étant formée d'une seule pièce et entourant la partie de palier interne (31) avec un jeu de coulissement,
la partie de palier externe (32) étant constituée à sa périphérie externe sous forme d'une bague dotée d'une troisième surface de palier (32b) en forme de segment sphérique, avec laquelle elle est supportée, avec un mouvement sphérique limité, dans une troisième partie de palier (33) dotée d'une quatrième surface de palier interne (33a) en forme de segment sphérique qui entoure la troisième surface de palier (32b),
au moins une rainure d'introduction (36) étant disposée sur un côté de la troisième partie de palier (33), rainure dans laquelle la deuxième partie de palier (32) peut être introduite dans une position décalée angulairement jusque dans une position située dans la troisième partie de palier (33), dans laquelle les centres de courbure (M) des troisième et quatrième surfaces de palier (32b, 33a) se superposent sensiblement l'un l'autre,
un dispositif de blocage en rotation (35) étant disposé entre les deuxième et troisième parties de palier (32, 33),
la deuxième partie de palier (32) est en appui axialement d'un côté au moyen d'une bride de support (42a, 42b) qui est raccordée en ne formant qu'une seule pièce à la première partie de palier (31) et est en appui dans la direction axiale opposée à la deuxième partie de palier (32),
une ou plusieurs rainures de graissage (38) étant prévues dans la surface de palier (32a) de la première ou de la deuxième partie de palier (31, 32), lesquelles rainures sont disposées axialement ou en biais et s'étendent latéralement aux deux extrémités, une ou plusieurs rainures de graissage (46a, 46b) étant prévues respectivement dans les surfaces de glissement (42c, 32c) de la deuxième partie de palier (32) et/ou de la bride de support (42a, 42b),
les rainures de graissage (46a, 46b) se trouvant entre la deuxième partie de palier (32) et les brides de support (42a, 42b) étant inclinées d'un côté dans une direction circonférentielle et de l'autre côté dans l'autre direction circonférentielle,
et les rainures de graissage (46a, 46b, 38) étant reliées ensemble et forment une partie d'un circuit fermé d'écoulement (47).

11. Machine à piston ou palier lisse pivotant selon l'une des revendications précédentes,
**caractérisé(e) en ce que**
deux rainures d'introduction (36) sont disposées face à face.

12. Machine à piston ou palier lisse pivotant selon la revendication 11,
**caractérisé(e) en ce que**
les surfaces de fond (36a) des rainures d'introduction (36) s'étendent tangentiellement dans la quatrième surface de palier en forme de segment sphérique (33a).

13. Machine à piston selon l'une des précédentes revendications 1, 2 ou 5 à 9 ou palier lisse pivotant selon l'une des précédentes revendications 3 à 12,
**caractérisé(e) en ce que**
la largeur (B) de la rainure d'introduction (36) mesure d'environ 1/3 jusqu'à ½ du diamètre (D) de la deuxième partie de palier (32) et la largeur (b) de la deuxième partie de palier (32), au moins en prenant en compte un jeu fonctionnel, est inférieure à la largeur (B) de la rainure d'introduction (36).

14. Machine à piston selon l'une des précédentes revendications 1, 2 ou 5 à 9 ou palier lisse pivotant selon l'une des précédentes revendications 3 à 13,
**caractérisé(e) en ce que**
le dispositif de blocage en rotation (35) est formé par une liaison à goupille entre la deuxième et la troisième partie de palier (32, 33) et comprend une goupille d'arrêt (35b) fixée sur la première partie de palier (32) avec un jeu fonctionnel axial dans un creux formé de préférence par un trou oblong axial (35a) prévu dans l'autre partie de palier (33).

15. Machine à piston selon l'une des précédentes revendications 1, 2 ou 5 à 9 ou palier lisse pivotant selon l'une des précédentes revendications 3 à 14,
**caractérisé(e) en ce que**
la troisième partie de palier (33) est une partie de palier en forme de douille, qui est insérée dans un alésage de palier (34) d'une partie de palier supplémentaire.

16. Machine à piston ou palier lisse pivotant selon la revendication 15,
**caractérisé(e) en ce que**
la partie de palier supplémentaire est formée par une pièce de raccordement (2d) d'une machine à piston, en particulier d'une machine à piston axiale (1).

17. Machine à piston ou palier lisse pivotant selon la revendication 16,
**caractérisé(e) en ce que**
la partie de palier en forme de douille est limitée du côté interne par une came de commande (14) qui est disposée sur le côté interne de la partie de raccordement (2d).

18. Machine à piston ou palier lisse pivotant selon la revendication 16 ou 17,
**caractérisé(e) en ce que**
une came de commande (14) est disposée sur le côté interne de la pièce de raccordement (2d), un passage axial (14a) pour un liquide de graissage est prévu dans la came de commande (14) ou entre la came de commande (14) et un arbre d'entraînement (19) soutenant la première partie de palier (31).
